# EUROPEAN PATENT APPLICATION

(11) **EP 4 165 994 A1**
(43) Date of publication of application: **19.04.2023**
(21) Application number: 21826717.7
(22) Date of filing: 15.06.2021
(51) Int. Cl.: A21C 1/00, A21C 3/04, A23L 7/10, A23L 7/109

(54) **PROCESSED BUCKWHEAT FLOUR, DRIED BUCKWHEAT NOODLES, AND METHOD FOR PRODUCING SAME**

(30) Priority: 15.06.2020 JP 2020103316
(71) Applicant: Yamamoto Foods Corporation, Nagano-shi, Nagano 381-0022 (JP)
(72) Inventor: YAMAMOTO Osamu, Nagano-shi, Nagano 381-0031 (JP)
(74) Representative: Regimbeau
(86) International application number: PCT/JP2021/022656
(87) International publication number: WO 2021/256461

(57) **Abstract**

The present invention relates to technical means for producing a dried buckwheat noodle which is excellent in flavor and texture and can be produced stably. More specifically, the present invention provides: processed buckwheat flour, wherein a degree of pregelatinization of starch is 70% or more, and wherein, in gel filtration chromatography analysis of a water extract of the processed buckwheat flour, a proportion of a peak area (A) for a weight average molecular weight (Mw) of 10 to 5,000 with respect to the total peak area (A/total peak area × 100) is 20% or more; a dried buckwheat noodle wherein the processed buckwheat flour is used as a raw material; and a method for producing the same.

## Description

### CROSS-REFERENCE TO RELATED APPLICATION

The present patent application claims priority based on Japanese Patent Application No. 2020-103316 filed on June 15, 2020, the entire disclosure of which is incorporated herein by reference.

### BACKGROUND OF THE INVENTION

### TECHNICAL FIELD

The present disclosure relates to processed buckwheat flour, a dried buckwheat noodle, and a method for producing the same.

### BACKGROUND ART

Dried buckwheat noodles using buckwheat flour are excellent processed foods that can be stored at ordinary temperatures for a long period of time, are easy to cook, and are provided inexpensively. For example, the dried buckwheat noodles are utilized as instant noodles for cup noodles or bag noodles, or utilized as so-called dry noodles, in many cases. Dried buckwheat noodles are produced through the following steps. First, powder raw materials such as buckwheat flour and wheat flour or starch are prepared. Kneading water in which common salt and the like are dissolved is added to the powder raw materials, and they are kneaded, compounded, rolled, and cut into noodle strings, thereby preparing fresh noodles containing buckwheat flour (hereinafter referred to as fresh buckwheat noodles).

After pregelatinization of the fresh buckwheat noodles by steaming, boiling, or the like, the pregelatinized buckwheat noodles can be hot-air dried or oil-heat dried to produce instant noodle-type dried buckwheat noodles. Also, so-called dry-noodle type dried buckwheat noodles can be produced by drying fresh buckwheat noodles as they are at ordinary temperatures or the like. These dried buckwheat noodles are widely used, and various types of commercial products are distributed, many of which have an excellent buckwheat flavor.

However, the dried buckwheat noodles have a problem that their buckwheat flavor is inevitably inferior to that of fresh buckwheat noodles, and improvement of their flavor is demanded. For example, Patent Document 1 discloses a method for producing a dried buckwheat noodle having excellent flavor and texture, which is produced by treating fresh noodles containing buckwheat flour with superheated steam and drying the treated noodles.

On the other hand, in recent years, buckwheat noodles with a reduced content of wheat flour and an increased content of buckwheat flour have attracted attention as gluten-free or reduced-gluten food ingredients. However, there are problems that the increase in content of buckwheat flour reduces the binding force between buckwheat flours, and that, when noodles are produced by a conventional method, noodle strings are easily cut, thereby making mass production of the noodles impossible. Also, there is a problem that, when thin noodles are produced by a conventional method using a raw material with a high buckwheat flour content, the chewiness of the noodles when chewed is extremely reduced, resulting in deterioration in flavor and texture.

### Citation List

### Patent Documents

Patent Document 1: JP 2015-73507 A

### SUMMARY OF THE INVENTION

An object of the present disclosure is to provide novel technical means for producing a dried buckwheat noodle which is excellent in flavor and texture and can be produced stably.

The present disclosers have now found that dried buckwheat noodles with excellent flavor and texture can be stably produced by using a specific processed buckwheat flour as part of raw material grain flour. The present disclosure is based on such findings.

According to one embodiment of the present disclosure, there is provided processed buckwheat flour,
wherein a degree of pregelatinization of starch is 70% or more, and
wherein, in gel filtration chromatography analysis of a water extract of the processed buckwheat flour, a proportion of a peak area (A) for a weight average molecular weight (Mw) of 10 to 5,000 with respect to the total peak area (A/total peak area × 100) is 20% or more.

According to another embodiment of the present disclosure, there is provided a dried buckwheat noodle,
wherein a degree of pregelatinization of starch is 50% or more, and
wherein, in gel filtration chromatography analysis of a water extract of the processed buckwheat flour, a proportion of a peak area (A) for a weight average molecular weight (Mw) of 100 to 5,000 with respect to the total peak area (A/total peak area × 100) is 30% or more.

According to another embodiment of the present disclosure, there is provided a method for producing a dried buckwheat noodle, wherein the processed buckwheat flour is used as part of raw material grain flour.

According to another embodiment of the present disclosure, there is provided a system for producing a dried buckwheat noodle, comprising:
a processed buckwheat flour producing unit which produces the processed buckwheat flour;
a raw material grain flour producing unit which blends the processed buckwheat flour into raw material grain flour;
a dough producing unit which mixes the raw material grain flour and water to obtain a dough;
a fresh noodle producing unit which shapes the dough to obtain a fresh noodle; and
a drying unit which dries the fresh noodle.

According to another embodiment of the present disclosure, there is provided a factory for producing a dried buckwheat noodle, comprising the system.

According to the present disclosure, it is possible to stably produce a dried buckwheat noodle which is excellent in flavor and texture. According to the present disclosure, it is possible to provide a fresh buckwheat noodle with texture such as chewy texture, easiness to swallow, and sweetness characteristic of buckwheat noodles, by using the dried buckwheat noodle described above. Also, according to the present disclosure, it is possible to provide a high-concentration soba-yu (water left in a pot after boiling of buckwheat noodle) when boiling the dried buckwheat noodle. Further, according to the present disclosure, it is possible to stably mass-produce the dried buckwheat noodle at an industrial level, while avoiding crushing of the noodle during production.

### BRIEF DESCRIPTION OF THE DRAWINGS

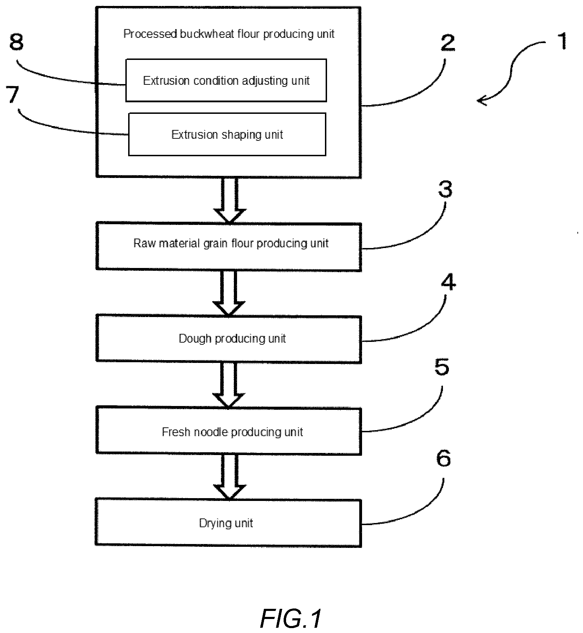

FIG. 1 illustrates a system for producing a dried buckwheat noodle according to one embodiment of the present disclosure.

### DETAILED DESCRIPTION OF THE INVENTION

### Processed buckwheat flour

According to one embodiment of the present disclosure, there is provided processed buckwheat flour, wherein a degree of pregelatinization of starch is 70% or more, and wherein, according to gel filtration chromatography analysis of a water extract of the processed buckwheat flour, a proportion of a peak area (A) for a weight average molecular weight (Mw) of 300 to 600 with respect to the total peak area (A/total peak area × 100) is 20% or more.

According to one embodiment of the present disclosure, in the processed buckwheat flour, pregelatinization (gelatinization) and reduction in molecular weight of sugar can be realized through a puffing treatment of buckwheat flour, as will be described later. Although not bound by theory, the processed buckwheat flour, when used as a raw material grain content, functions as a paste to improve the strength of noodles, to retain flavor components during eating and drinking, and to realize characteristic texture and chewiness, and, at the same time, exhibits the elution properties of low molecular weight components to realize easiness to swallow, taste and sweetness characteristic of buckwheat noodles, and provision of thick soba-yu.

According to one embodiment of the present disclosure, the starch in the processed buckwheat flour is preferably pregelatinized at a high level, from the viewpoint of functioning as a paste. The degree of pregelatinization of the starch in the processed buckwheat flour is usually 70% or more, preferably 75% or more, and more preferably 80% or more. The starch in the processed buckwheat flour may be completely pregelatinized, but may contain a small amount of non-pregelatinized sugar, from the viewpoint of retaining the original flavor of buckwheat. Therefore, an upper limit of the degree of pregelatinization of the starch in the processed buckwheat flour may be preferably 100%, and is more preferably 95%, and even more preferably 90%. The degree of pregelatinization can be measured by the glucoamylase second method according to the Examples which will be described below.

According to one embodiment of the present disclosure, the water extract of the processed buckwheat flour is preferably reduced in molecular weight, from the viewpoint of retaining good elution properties in water. According to one embodiment of the present disclosure, in the gel filtration chromatography analysis of the water extract of the processed buckwheat flour, the proportion of the peak area (A) for the weight average molecular weight (Mw) of 10 to 5,000 with respect to the total peak area (A/total peak area × 100) is 20% or more, preferably 20 to 50%, and more preferably 20 to 45%.

Also, according to one embodiment of the present disclosure, in the gel filtration chromatography analysis of the water extract of the processed buckwheat flour, the weight average molecular weight (Mw) corresponding to the peak area (A) is usually 10 to 5,000 as described above, preferably 300 to 700, more preferably 400 to 600, and even more preferably 400 to 550.

Also, according to one embodiment of the present disclosure, in the gel filtration chromatography analysis of the water extract of the processed buckwheat flour, a number average molecular weight (Mn) of a region corresponding to the peak area (A) is, for example, 150 to 400, preferably 200 to 350, and even more preferably 250 to 300.

Also, according to one embodiment of the present disclosure, in the gel filtration chromatography analysis of the water extract of the processed buckwheat flour, a degree of dispersion (Mw/Mn) of the region corresponding to the peak area (A) is, for example, 0.5 to 3.0, preferably 1.0 to 2.5, and even more preferably 1.5 to 2.0.

Also, according to one embodiment of the present disclosure, in the gel filtration chromatography analysis of the water extract of the processed buckwheat flour, a plurality of peaks may exist, in addition to the region corresponding to the peak area (A) (hereinafter also referred to as "peak A"). Also, according to one embodiment of the present disclosure, in the gel filtration chromatography analysis of the water extract of the processed buckwheat flour, a region corresponding to a peak area (B) (hereinafter also referred to as "peak B") and a region corresponding to a peak area (C) (hereinafter also referred to as "peak C") which will be described later exist, in addition to the peak A.

According to one embodiment of the present disclosure, in the gel filtration chromatography analysis of the water extract of the processed buckwheat flour, a proportion of the peak area (B) for a weight average molecular weight (Mw) of 5,000 to 20,000 to the total peak area (B/total peak area × 100) is usually 1% or more, preferably 5 to 30%, and more preferably 10 to 25%.

Also, according to one embodiment of the present disclosure, in the gel filtration chromatography analysis of the water extract of the processed buckwheat flour, the weight average molecular weight (Mw) corresponding to the peak area (B) is usually 5,000 to 20,000 as described above, preferably 6,000 to 180,000, more preferably 7,000 to 150,000, and even more preferably 9,000 to 130,000.

Also, according to one embodiment of the present disclosure, in the gel filtration chromatography analysis of the water extract of the processed buckwheat flour, a number average molecular weight (Mn) of a region corresponding to the peak area (B) is, for example, 1,000 to 11,000, preferably 3,000 to 9,000, and even more preferably 5,000 to 7,000.

Also, according to one embodiment of the present disclosure, in the gel filtration chromatography analysis of the water extract of the processed buckwheat flour, a degree of dispersion (Mw/Mn) of the region corresponding to the peak area (B) is, for example, 0.1 to 3.0, preferably 0.5 to 2.5, and even more preferably 1.0 to 2.0.

According to one embodiment of the present disclosure, in the gel filtration chromatography analysis of the water extract of the processed buckwheat flour, a proportion of the peak area (C) for a weight average molecular weight (Mw) of 80,000 to 800,000 to the total peak area (C/total peak area × 100) is usually 5% or more, preferably 20 to 70%, and more preferably 30 to 50%.

Also, according to one embodiment of the present disclosure, in the gel filtration chromatography analysis of the water extract of the processed buckwheat flour, the weight average molecular weight (Mw) corresponding to the peak area (C) is usually 80,000 to 800,000 as described above, preferably 90,000 to 700,000, more preferably 100,000 to 700,000, and even more preferably 100,000 to 200,000.

Also, according to one embodiment of the present disclosure, in the gel filtration chromatography analysis of the water extract of the processed buckwheat flour, a number average molecular weight (Mn) of a region corresponding to the peak area (C) is, for example, 90,000 to 500,000, preferably 100,000 to 400,000, and even more preferably 200,000 to 300,000.

Also, according to one embodiment of the present disclosure, in the gel filtration chromatography analysis of the water extract of the processed buckwheat flour, a degree of dispersion (Mw/Mn) of the region corresponding to the peak area (C) is, for example, 3.0 to 8.0, preferably 3.5 to 7.0, and even more preferably 4.0 to 6.5.

According to one embodiment of the present disclosure, the gel filtration chromatography analysis can be performed under the following conditions.
[HPLC analysis condition]
Column: column for aqueous gel filtration chromatography
Mobile phase: 0.1 M aqueous sodium nitrate solution
Flow rate: 0.5 mL/min
Column temperature: 40°C
Detector: Refractive Index Detector (RI)
Standard product: pullulan

According to one embodiment of the present disclosure, one or more columns for aqueous gel filtration chromatography can be used in combination in the gel filtration chromatography analysis. The gel filtration carrier (gel filtration matrix) used in the column for aqueous gel filtration chromatography is preferably a polymer, and more preferably a polymer gel (porous polymer) based on polyhydroxymethacrylate or the like. According to one embodiment of the present disclosure, the column for gel filtration may be a column having a column length of 50 to 300 mm, an inner diameter of 6 to 8 mm, a pH to be used of 3 to 10, and a maximum pressure to be used (MPa) of 3.0 to 5.0. Each specific parameter can be determined based on the same criteria as SB-G+SB-804HQ+SB-805HQ manufactured by Shodex, which is used in the Examples which will be described later.

According to one embodiment of the present disclosure, in a chromatogram curve by the gel filtration chromatography analysis, a retention time for the peak A preferably ranges from 40 to 44 minutes. According to one embodiment of the present disclosure, in the chromatogram curve by the gel filtration chromatography analysis, a retention time for the peak B preferably ranges from 35 to 40 minutes. According to one embodiment of the present disclosure, in the chromatogram curve by the gel filtration chromatography analysis, a retention time for the peak C preferably ranges from 20 to 35 minutes.

Further, according to one embodiment of the present disclosure, the water extract of the processed buckwheat flour can be obtained by subjecting 10 parts by mass of the processed buckwheat flour to an extraction treatment in 100 parts by mass of boiling water for 5 to 10 minutes, and optionally filtering the water. When 10 parts by mass of the processed buckwheat flour is subjected to an extraction treatment in 100 parts by mass of boiling water for 5 to 10 minutes, an amount of the water extract of the processed buckwheat flour is preferably 1 to 3 parts by mass, more preferably 1.1 g to 2 parts by mass, and even more preferably 1.1 to 1.5 parts by mass, from the viewpoint of achieving soba-yu with a good flavor and a high concentration when boiling buckwheat noodles. Further details of the method for measuring the amount of the water extract can be implemented according to the Examples which will be described later.

### Dried buckwheat noodle

According to one embodiment of the present disclosure, there is provided a dried buckwheat noodle obtained by using raw material grain flour at least partially containing the processed buckwheat flour. In the dried buckwheat noodle described above, the processed buckwheat flour which has undergone gelatinization and molecular weight reduction treatment of sugar is mixed, as a raw material, with normal buckwheat flour and used, and thus production stability, a good texture when eating, and the like can be achieved at the same time.

According to one embodiment of the present disclosure, there is provided a dried buckwheat noodle, wherein a degree of pregelatinization of starch is 50% or more, and wherein, in gel filtration chromatography analysis of a water extract of the dried buckwheat noodle, a proportion of a peak area (A) for a weight average molecular weight (Mw) of 100 to 5,000 with respect to the total peak area (A/total peak area × 100) is 30% or more.

The dried buckwheat noodle preferably contains starch pregelatinized at a high level, from the viewpoint of stably binding the raw material grain flours in the noodle with the pregelatinized starch derived from the processed buckwheat flour. The degree of pregelatinization of the starch in the dried buckwheat noodle is usually 50% or more, and preferably 55% or more. In addition, the dried buckwheat noodle may contain an appropriate amount of a non-pregelatinized sugar, from the viewpoint of retaining the strength of the buckwheat noodle. Therefore, an upper limit of the degree of pregelatinization of the starch in the dried buckwheat noodle may be preferably 90%, and is more preferably 80%, and even more preferably 70%.

According to one embodiment of the present disclosure, the molecular weight of the water extract of the dried buckwheat noodle is preferably reduced, like the processed buckwheat flour which is a raw material therefor, from the viewpoint of retaining good elution properties in water, and improving the flavor and taste when eating, and the amount of soba-yu. According to one embodiment of the present disclosure, the proportion of the peak area (A) for the weight average molecular weight (Mw) of 300 to 600 to the total peak area (A/total peak area × 100), according to the gel filtration chromatography analysis of the water extract of the processed buckwheat flour, is usually 30% or more, preferably 30 to 99%, and more preferably 40 to 80%.

Also, according to one embodiment of the present disclosure, in the gel filtration chromatography analysis of the water extract of the dried buckwheat noodle, a number average molecular weight (Mn) of a region corresponding to the peak area (A) is, for example, 150 to 400, preferably 200 to 350, and even more preferably 250 to 300.

Also, according to one embodiment of the present disclosure, in the gel filtration chromatography analysis of the water extract of the dried buckwheat noodle, a degree of dispersion (Mw/Mn) of the region corresponding to the peak area (A) is, for example, 0.5 to 3.0, preferably 1.0 to 2.5, and even more preferably 1.5 to 2.0.

Also, according to one embodiment of the present disclosure, in the gel filtration chromatography analysis of the water extract of the dried buckwheat noodle, a plurality of peaks may exist, in addition to the region corresponding to the peak A, like the processed buckwheat flour. According to one embodiment of the present disclosure, in the gel filtration chromatography analysis of the water extract of the processed buckwheat flour, peak B and peak C, which will be described later, exist, in addition to the peak A.

According to one embodiment of the present disclosure, in the gel filtration chromatography analysis of the water extract of the dried buckwheat noodle, a proportion of the peak area (B) for the weight average molecular weight (Mw) of 5,000 to 20,000 to the total peak area (B/total peak area × 100) is usually 1% or more, preferably 5 to 30%, and more preferably 10 to 25%.

Also, according to one embodiment of the present disclosure, in the gel filtration chromatography analysis of the water extract of the dried buckwheat noodle, the weight average molecular weight (Mw) corresponding to the peak area (B) is usually 5,000 to 20,000 as described above, preferably 6,000 to 180,000, more preferably 7,000 to 150,000, and even more preferably 9,000 to 130,000.

Also, according to one embodiment of the present disclosure, in the gel filtration chromatography analysis of the water extract of the dried buckwheat noodle, a number average molecular weight (Mn) of a region corresponding to the peak area (B) is, for example, 1,000 to 11,000, preferably 3,000 to 9,000, and even more preferably 5,000 to 7,000.

Also, according to one embodiment of the present disclosure, in the gel filtration chromatography analysis of the water extract of the dried buckwheat noodle, a degree of dispersion (Mw/Mn) of the region corresponding to the peak area (B) is, for example, 0.1 to 3.0, preferably 0.5 to 2.5, and even more preferably 1.0 to 2.0.

According to one embodiment of the present disclosure, in the gel filtration chromatography analysis of the water extract of the dried buckwheat noodle, a proportion of the peak area (C) for the weight average molecular weight (Mw) of 80,000 to 800,000 to the total peak area (C/total peak area × 100) is usually 5% or more, preferably 10 to 50%, and more preferably 10 to 40%.

Also, according to one embodiment of the present disclosure, in the gel filtration chromatography analysis of the water extract of the dried buckwheat noodle, the weight average molecular weight (Mw) corresponding to the peak area (C) is usually 80,000 to 800,000 as described above, preferably 90,000 to 700,000, more preferably 100,000 to 700,000, and even more preferably 100,000 to 200,000.

Also, according to one embodiment of the present disclosure, in the gel filtration chromatography analysis of the water extract of the dried buckwheat noodle, a number average molecular weight (Mn) of a region corresponding to the peak area (C) is, for example, 90,000 to 500,000, preferably 100,000 to 400,000, and even more preferably 150,000 to 250,000.

Also, according to one embodiment of the present disclosure, in the gel filtration chromatography analysis of the water extract of the dried buckwheat noodle, a degree of dispersion (Mw/Mn) of the region corresponding to the peak area (C) is, for example, 3.0 to 8.0, preferably 3.5 to 7.0, and even more preferably 4.0 to 6.5.

According to one embodiment of the present disclosure, the dried buckwheat noodle, like the processed buckwheat flour which is a raw material therefor, can produce a large amount of the water extract. According to one embodiment of the present disclosure, the water extract of the processed buckwheat flour can be obtained by subjecting 10 parts by mass of the dried buckwheat noodle to an extraction treatment in 100 parts by mass of boiling water for 5 to 10 minutes. When 10 parts by mass of the dried buckwheat noodle is subjected to an extraction treatment in 100 parts by mass of boiling water for 5 to 10 minutes, an amount of the water extract of the dried buckwheat noodle is preferably 1 to 3 parts by mass, more preferably 1.1 g to 2 parts by mass, and even more preferably 1.1 to 1.5 parts by mass, from the viewpoint of achieving soba-yu with a good flavor and a high concentration when boiling the buckwheat noodle. Here, the extraction treatment is a treatment of putting the dried buckwheat noodle in boiling water, and preferably means a buckwheat noodle boiling treatment.

### Method for producing dried buckwheat noodle

Next, one embodiment of the method for producing a dried buckwheat noodle will be described.

According to one embodiment of the present disclosure, in the method for producing a dried buckwheat noodle, the processed buckwheat flour described above is produced.

According to one embodiment of the present disclosure, the processed buckwheat flour can be obtained by puffing a buckwheat flour raw material using an extrusion shaping machine and pulverizing it.

According to one embodiment of the present disclosure, the buckwheat flour raw material to be used may be a known buckwheat flour raw material, and examples thereof include a ground product of buckwheat's seed (a treated product obtained by removing husk with a dust collector or the like while cracking buckwheat's seed with husk) and a husk-removed whole seed (marunuki dappi) product of buckwheat's seed (treated product obtained by removing husk while keeping the shape of buckwheat's seed without cracking it). According to a preferred embodiment of the present disclosure, the buckwheat flour raw material is preferably a ground product of buckwheat's seed. According to a preferred embodiment of the present disclosure, the buckwheat flour raw material is a buckwheat flour raw material that has not been subjected to a puffing treatment by means of an extrusion shaping machine (extruder) (hereinafter, also referred to as "non-puffed buckwheat flour raw material").

Treatment conditions such as a treatment temperature and an extrusion pressure in the extrusion shaping machine can be determined, in advance, by those skilled in the art, using the desired degree of pregelatinization of starch in the processed buckwheat flour and molecular weight of the water extract thereof as indices.

According to one embodiment of the present disclosure, a known device may be used as the extrusion shaping machine, but the buckwheat flour raw material is preferably subjected to a puffing treatment using a single screw extruder. It is an unexpected fact that the single screw extruder can be used to simultaneously achieve the degree of pregelatinization and reduction in molecular weight of starch, at the desired levels, in the processed buckwheat flour. Although not bound by theory, it is considered that, due to structural properties, the single screw extruder applies a greater stress to the buckwheat flour raw material in a short time when puffing the buckwheat flour raw material associated with extrusion than a twin-screw extruder, and thus can efficiently perform pregelatinization (gelatinization) and reduction in molecular weight of sugar.

The treatment temperature for the buckwheat flour raw material in the extrusion shaping machine is not particularly limited, and is, for example, 100°C to 250°C. Also, the extrusion pressure in the extrusion shaping machine is not particularly limited, and is, for example, 100 to 250 kg/cm².

The puffed product of the buckwheat flour raw material extruded from the extrusion shaping machine may be pulverized using a known pulverizer such as a rotary impact pulverizer or a roll pulverizer, and sieved. The particle size of the processed buckwheat flour is not particularly limited, and can be, for example, in the range of 20 to 200 µm. The average particle size (volume average particle size (D50)) of the processed buckwheat flour is, for example, 90 to 120 µm. The average particle size can be measured using a known laser diffraction scattering method.

Further, according to one embodiment of the present disclosure, the processed buckwheat flour is blended into the raw material grain flour.

An amount of the processed buckwheat flour to be blended in the raw material grain flour can be, for example, 5 to 95% by mass, but, from the viewpoint of retaining the binding properties of the powders to each other in the raw material grain flour, is preferably 30 to 60% by mass, more preferably 35 to 55% by mass, and even more preferably 45 to 50% by mass.

Further, according to one embodiment of the present disclosure, grain flour other than the processed buckwheat flour can be blended into the raw material grain flour.

The grain flour other than the processed buckwheat flour, to be used in the raw material grain flour, is, for example, buckwheat flour other than the processed buckwheat flour or wheat flour (including raw materials therefor), but is buckwheat flour (including buckwheat flour raw materials therefor) other than the processed buckwheat flour, from the viewpoint of achieving gluten-free raw material grain flour. As the buckwheat flour other than the processed buckwheat flour, known buckwheat flour may be used, and examples thereof include first flour, second flour, and third flour.

According to one embodiment of the present disclosure, the buckwheat flour other than the processed buckwheat flour may be buckwheat flour produced by using a raw material which is of the same kind as or a different kind from the buckwheat flour raw material to be used in the production of the processed buckwheat flour, but is preferably buckwheat flour produced by using the same kind of raw material. Also, according to a preferred embodiment of the present disclosure, the grain flour other than the processed buckwheat flour is non-puffed buckwheat flour.

According to one embodiment of the present disclosure, an amount of the buckwheat flour other than the processed buckwheat flour to be blended in the raw material grain flour may be, for example, 5 to 95% by mass, but, from the viewpoint of retaining the original taste of buckwheat noodles and the strength of buckwheat noodles, is preferably 30 to 60% by mass, more preferably 35 to 55% by mass, and even more preferably 45 to 50% by mass.

According to one embodiment of the present disclosure, a mass ratio between the processed buckwheat flour and the buckwheat flour other than the processed buckwheat flour in the raw material grain flour is usually 30:70 to 70:30, preferably 40:60 to 60:40, and more preferably 50:50 to 60:40.

According to one embodiment of the present disclosure, the total amount of the processed buckwheat flour and the buckwheat flour other than the processed buckwheat flour (total buckwheat flour amount) in the raw material grain flour is usually 80 to 100% by mass, and preferably 90 to 100% by mass with respect to the total amount of the raw material grain flour, from the viewpoint of reducing the amount of gluten in buckwheat noodles. According to a particularly preferred embodiment of the present disclosure, the total buckwheat flour amount is 100% by mass with respect to the total amount of the raw material grain flour, and the dried buckwheat noodle produced by using such raw material grain flour is also referred to as "Jyuwari soba (a buckwheat noodle made from 100% buckwheat flour)."

According to one embodiment of the present disclosure, when grain flour other than buckwheat flour (the processed buckwheat flour and the buckwheat flour other than the processed buckwheat flour) is blended in the raw material grain flour, an amount of the grain flour, other than the buckwheat flour, to be blended can be, for example, 10 to 70% by mass, but, from the viewpoint of reducing the amount of gluten in buckwheat noodles, is usually 20% by mass or less, preferably 10% by mass or less, and more preferably 0% by mass, with respect to the total amount of the raw material grain flour. According to one embodiment of the present disclosure, the grain flour other than the buckwheat flour is wheat flour.

The grain size of the raw material grain flour is not particularly limited, and may be adjusted using a sieve or the like. The grain size can be appropriately adjusted to be, for example, within the range of 20 to 450 µm.

The dried buckwheat noodle can be produced by making noodles using the raw material grain flour described above by a conventional method. Therefore, according to one embodiment, the method for producing a dried buckwheat noodle comprises the step of mixing the raw material grain flour and water to obtain a dough, the step of shaping the dough to obtain a fresh noodle, and the step of drying the fresh noodle.

According to one embodiment of the present disclosure, the step of mixing the raw material grain flour and water to obtain a dough (kneaded product) can be carried out using a normal mixing device such as a vacuum mixer.

The water to be mixed with the raw material grain flour may be pure water, but may also be kneading water (kneading water added with additives such as common salt, an alkaline agent, a thickener, a noodle quality improver and a pigment according to need).

According to one embodiment of the present disclosure, a mass ratio between the raw material grain flour and the water may be appropriately adjusted in consideration of a climate change and the like, and an amount of the water to be blended is usually 30 to 60% by mass, and preferably 40 to 50% by mass with respect to the total amount of the raw material grain flour.

Further, according to one embodiment of the present disclosure, in the step of shaping the dough to obtain a fresh noodle, first, a noodle strip may be formed with a composite roll. As a method for forming the noodle strip, a method of extruding a kneaded product of the raw material grain flour and the water using an extruding machine or the like to form a noodle strip may be employed. Also, the kneaded product may be extruded under reduced pressure using a vacuum extruding machine or the like. Next, the noodle strip obtained can be rolled to a predetermined thickness using a roll, and then passed through a cutting blade. Thus, a fresh buckwheat noodle can be produced. As another method, a fresh noodle string can be formed by extruding the kneaded product with an extruder. A group of fresh noodle strings can be transferred to the drying step in a state where their middle part is hung on a bar made of a metal or the like.

In the step of drying the fresh noodle, first, the fresh noodle strings may be semi-dried. In the semi-drying step, the group of fresh noodle strings hung on the bar may be allowed to stay in a drying chamber maintained at a temperature of 25 to 28°C and a humidity of 66 to 68% for about 10 to 15 minutes. The air in this first drying chamber is preferably stirred by an electric fan or the like. The group of noodle strings which have passed through the first drying chamber to be brought into a semi-dried state enter a second drying chamber maintained at 30 to 33°C and a humidity of 67 to 68%, and are allowed to stay therein for about 70 to 80 minutes. The air in the second drying chamber is also preferably stirred by an electric fan or the like.

Next, the group of noodle strings may be subjected to a third drying stage in a state where their middle part is hung on the bar. This third drying stage can be carried out in a third drying chamber provided with an electric fan which can be adjusted in amount of air to be blown and a dehumidifier. The drying in the third drying chamber is preferably performed at a temperature of about 35 to 38°C so that an amount of air to be blown from the electric fan or the like is appropriately adjusted to fall within an appropriate range. The dried noodle strings can be solidified in a state where space parts are formed between the respective noodle strings without the noodle strings being fused to each other. The group of solidified noodle strings are packaged.

According to one embodiment of the present disclosure, the dried buckwheat noodle obtained by the above method can be provided. Such a dried buckwheat noodle has high binding properties, and the starch reduced in molecular weight can be moderately eluted in boiling water. Hence, when such a dried buckwheat noodle is completely boiled, a boiled buckwheat noodle having a good chewiness, easiness to swallow and a good flavor can be obtained, while thick soba-yu can be provided.

Further, according to another embodiment of the present disclosure, there is provided a system for producing a dried buckwheat noodle using the processed buckwheat flour as part of raw material grain flour. As illustrated in FIG. 1, a preferred system 1 as described above comprises: a processed buckwheat flour producing unit 2 that produces processed buckwheat flour in which starch is substantially completely pregelatinized and reduced in molecular weight; a raw material grain flour producing unit 3 that blends the processed buckwheat flour into the raw material grain flour; a dough producing unit 4 that mixes the raw material grain flour and water to obtain a dough; a fresh noodle producing unit 5 that shapes the dough to obtain a fresh noodle; and a drying unit 6 that dries the fresh noodle. The respective units may be connected by a belt conveyor or the like for transporting raw materials and treated products.

The processed buckwheat flour producing unit 2 preferably comprises an extrusion shaping unit 7 and an extrusion condition adjusting unit 8, and
the extrusion condition adjusting unit can adjust a treatment temperature and an extrusion pressure using a degree of pregelatinization and an average molecular weight of starch in the processed buckwheat flour as indice.

The extrusion shaping unit 7 can be composed of a known extrusion shaping machine such as a single screw extruder.

The extrusion condition adjusting unit 8 may comprise: a treatment condition instructing unit (e.g., a CPU) that sets treatment conditions in the extrusion shaping unit (treatment temperature and extrusion pressure in the extrusion shaping unit) based on correlation data between the treatment temperature and extrusion pressure, and the degree of pregelatinization and an average molecular weight of the starch in the processed buckwheat flour obtained; and a sensor that measures actual treatment conditions in the extrusion shaping unit. Measurement information from the sensor is transmitted to the treatment condition instructing unit, so that feedback control of the treatment conditions can be performed.

The processed buckwheat flour can be transported from the extrusion shaping unit 7 in the processed buckwheat flour producing unit 2 to the raw material grain flour producing unit 3, and blended with the raw material grain flour other than the processed buckwheat flour. The raw material grain flour producing unit 3 may be composed of a known mixer.

In the dough producing unit 4, the raw material grain flour transported from the raw material grain flour producing unit 3 can be mixed with water to produce a noodle dough. The dough producing unit 4 may be composed of a known mixer, and may be integrated with or separate from the raw material grain flour producing unit 3.

In the fresh noodle producing unit 5, the dough transported from the dough producing unit 4 can be shaped to obtain a fresh noodle. The fresh noodle producing unit 5 can be configured so as to comprise an extruding unit that extrudes the dough, a roll for forming noodle strips, and a noodle strip cutting machine for cutting the noodle strips into noodle strings. Alternatively, it may be composed of an extruder that produces noodle strips and noodle strings directly from the dough.

In the drying unit 6, the fresh noodle transported from the fresh noodle producing unit 5 can be dried. The drying unit can be composed, for example, of a drying chamber, an air blowing device such as an electric fan, and a bar for hanging the noodle strings for drying.

The dried buckwheat noodle obtained by the system described above has excellent binding properties of raw materials, and are suitable for stable production and mass production in a factory. Therefore, according to a preferred aspect of the present disclosure, there is provided a factory for producing a dried buckwheat noodle, comprising the system described above. Also, according to a preferred embodiment, the factory is a closed system factory. Operating the above-described system in a closed system is particularly preferable for producing a dried buckwheat noodle (Jyuwari soba) in which the gluten-free raw material grain flour is made from 100% by mass of buckwheat flour.

According to one embodiment of the present disclosure, there are provided:
(1) Processed buckwheat flour,
   wherein a degree of pregelatinization of starch is 70% or more, and
   wherein, in gel filtration chromatography analysis of a water extract of the processed buckwheat flour, a proportion of a peak area (A) for a weight average molecular weight (Mw) of 10 to 5,000 with respect to the total peak area (A/total peak area × 100) is 20% or more.
(2) The processed buckwheat flour according to (1), wherein the degree of pregelatinization of the starch in the processed buckwheat flour is 75 to 99%.
(3) The processed buckwheat flour according to (1) or (2), wherein the proportion of the peak area (A) for the weight average molecular weight (Mw) of 10 to 5,000 with respect to the total peak area (A/total peak area × 100) is 20 to 50%.
(4) The processed buckwheat flour according to any one of (1) to (3), wherein the water extract of the processed buckwheat flour is obtained by subjecting 10 parts by mass of the processed buckwheat flour to an extraction treatment in 100 parts by mass of boiling water for 5 to 10 minutes.
(5) The processed buckwheat flour according to (4), wherein a proportion of the water extract of the processed buckwheat flour is 1.1 to 3 parts by mass with respect to 10 parts by mass of the processed buckwheat flour.
(6) A dried buckwheat noodle,
   wherein a degree of pregelatinization of starch is 50% or more, and
   wherein, in gel filtration chromatography analysis of a water extract of the dried buckwheat noodle, a proportion of a peak area (A) for a weight average molecular weight (Mw) of 100 to 5,000 with respect to the total peak area (A/total peak area × 100) is 30% or more.
(7) The dried buckwheat noodle according to (6), wherein the degree of pregelatinization of the starch in the dried buckwheat noodle is 55 to 99%.
(8) The dried buckwheat noodle according to (6) or (7), wherein the proportion of the peak area (A) for a weight average molecular weight (Mw) of 300 to 600 with respect to the total peak area (A/total peak area × 100) is 30 to 99%.
(9) The dried buckwheat noodle according to any one of (6) to (8), wherein the water extract of the dried buckwheat noodle is obtained by subjecting 10 parts by mass of the dried buckwheat noodle to an extraction treatment in 100 parts by mass of boiling water for 5 to 10 minutes.
(10) The dried buckwheat noodle according to (9), wherein a proportion of the water extract of the dried buckwheat noodle is 1.1 to 3 parts by mass with respect to 10 parts by mass of the dried buckwheat noodle.
(11) The dried buckwheat noodle according to any one of (6) to (10), wherein the processed buckwheat flour according to any one of (1) to (5) is used as a raw material.
(12) The dried buckwheat noodle according to any one of (6) to (11), which is Jyuwari soba (a buckwheat noodle made from 100% buckwheat flour).
(13) A method for producing a dried buckwheat noodle, wherein the processed buckwheat flour according to any one of (1) to (5) is used as part of raw material grain flour.
(14) The method according to (13), wherein the raw material grain flour consists of the processed buckwheat flour and buckwheat flour other than the processed buckwheat flour.
(15) The method according to (13) or (14), wherein a content of the processed buckwheat flour in the raw material grain flour is 20 to 80% by mass.
(16) method according to any one of (13) to (15), which comprises:
   the step of mixing the raw material grain flour and water to obtain a dough;
   the step of shaping the dough to obtain a fresh noodle; and
   the step of drying the fresh noodle.
(17) The method according to any one of (13) to (16), wherein the processed buckwheat flour is obtained by feeding a buckwheat flour raw material to an extruding machine and puffing it.
(18) The method according to (17), wherein a treatment temperature and an extrusion pressure in the extruding machine are determined in advance using a degree of pregelatinization of starch in the processed buckwheat flour and a molecular weight of a water extract of the processed buckwheat flour as indices.
(19) The method according to (17) or (18), wherein the extrusion shaping machine is a single screw extruder.
(20) The method according to any one of (16) to (19), wherein an amount of the water with respect to the total amount of the raw material grain flour is 30 to 60% by mass.
(21) A system for producing a dried buckwheat noodle, comprising:
   a processed buckwheat flour producing unit which produces the processed buckwheat flour according to any one of (1) to (5);
   a raw material grain flour producing unit which blends the processed buckwheat flour into raw material grain flour;
   a dough producing unit which mixes the raw material grain flour and water to obtain a dough;
   a fresh noodle producing unit which shapes the dough to obtain a fresh noodle; and
   a drying unit which dries the fresh noodle.
(22) The system according to (21), wherein the processed buckwheat flour producing unit comprises an extruding machine and an extrusion condition adjusting unit, and
   wherein the extrusion condition adjusting unit adjusts a treatment temperature and an extrusion pressure using a degree of pregelatinization and an average molecular weight of starch in the processed buckwheat flour as indice.
(23) A factory for producing a dried buckwheat noodle, comprising the system according to (21) or (22).

### EXAMPLES

The present disclosure will be specifically described based on the following examples, but is not limited to these examples. Unless otherwise specified, the units and measurement methods described in the present specification conform to the Japanese Industrial Standards (JIS).

### Production Example: Production of dried buckwheat noodle

### (Test Section 1)

A buckwheat flour raw material (a ground product of buckwheat's seed (domestic)) was subjected to a puffing treatment with a single screw extruder (treatment temperature: 110 to 200°C) to obtain a puffed buckwheat product. The puffed buckwheat product obtained was coarsely pulverized with a crusher and then crushed into fine powder of 30 to 180 µm (volume average particle size: 109 µm) using a pulverizer to obtain processed buckwheat flour 1.

The processed buckwheat flour obtained (50 to 60% by mass) and buckwheat flour raw material (40 to 50% by mass) were blended to obtain raw material grain flour, and 100 kg of the raw material grain flour was put into a mixer for noodle making to obtain a mixture. Water was added in a mass ratio of 40 to 50% with respect to 100% of the mixture, and they were mixed for 15 to 30 minutes.

Then, dried buckwheat noodles (length: 20 cm, cross section - about 1000 µm × about 3000 µm) were obtained by a normal noodle making process.

### (Test Section 2)

Dried buckwheat noodles were obtained by the same technique as in Test Section 1, except that the processed buckwheat flour 1 (60 to 70% by mass), buckwheat flour raw material (20 to 30% by mass), and wheat flour (10% by mass) were blended to prepare raw material grain flour.

### (Test Section 3)

Processed buckwheat flour 2 was obtained by the same technique as in Test Section 1, except that a ground product of buckwheat's seed (made in China) was used as the buckwheat flour raw material. Dried buckwheat noodles were then produced.

### Test Example 1: Sensory test

For Test Section 1, Test Section 2, Test Section 3, Reference Section 1 (Shinshu Hon Jyuwari Soba, Karakida Seifun K. K.), and Reference Section 2 (Takizawa Sarashina Jyuwari Soba, Nisshin Foods Inc.), the dried buckwheat noodles were completely boiled in boiling water for 5 minutes to obtain boiled buckwheat noodles. Each of the boiled buckwheat noodles obtained was subjected to sensory evaluations, by 14 panelists, for the texture, easiness to swallow, sweetness, thickness of soba-yu (liquid left over after boiling of the buckwheat noodles), and comprehensive evaluation. The sensory evaluations were performed based on the evaluation criteria which will be indicated below, and the averages of the obtained scores were calculated.

### Criteria for evaluation of texture

5: Very good texture and crispness
4: Good texture and crispness
3: Slightly good texture and crispness
2: Poor texture and crispness
1: Very poor texture and crispness

### Criteria for evaluation of easiness to swallow

5: Very good easiness to swallow
4: Good easiness to swallow
3: Slightly good easiness to swallow
2: Poor easiness to swallow
1: Very poor easiness to swallow

### Criteria for evaluation of sweetness

5: Feel sweetness of buckwheat noodles very much
4: Feel sweetness of buckwheat noodles
3: Feel sweetness of buckwheat noodles slightly
2: Poor sweetness of buckwheat noodles
1: Very poor sweetness of buckwheat noodles

### Criteria for evaluation of thickness of soba-yu

5: Feel thickness of soba-yu very much
4: Feel thickness of soba-yu
3: Feel thickness of soba-yu slightly
2: Poor thickness of soba-yu
1: Very poor thickness of soba-yu

### Criteria for comprehensive evaluation

5: Both taste of buckwheat noodles and thickness of soba-yu are very favorable
4: One of taste of buckwheat noodles and thickness of soba-yu is very favorable, and the other is favorable
3: Both taste of buckwheat noodles and thickness of soba-yu are favorable
2: Either taste of buckwheat noodles or thickness of soba-yu is unfavorable
1: Both taste of buckwheat noodles and thickness of soba-yu are unfavorable

The results were as indicated in Table 1.

**[Table 1]**

| | Test Section 1 | Test Section 2 | Test Section 3 | Reference Section 1 | Reference Section 2 |
|---|---|---|---|---|---|
| Texture | 3.9 | 4.2 | 4.6 | 2.7 | 3 |
| Easiness to swallow | 3.9 | 4.3 | 4.6 | 2.9 | 3.1 |
| Sweetness | 3.8 | 4.1 | 4.1 | 2.9 | 2.9 |
| Thickness of soba-yu | 4.5 | 4.0 | 4.9 | 2.7 | 2.5 |
| Comprehensive evaluation | 4.4 | 4.3 | 4.8 | 2.6 | 2.6 |

Test Sections 1 to 3 using the processed buckwheat flour had higher scores of texture, easiness to swallow, sweetness, thickness of soba-yu, and comprehensive evaluation than those for commercial products (Reference Sections 1 and 2).

### Test Example 2: Test for measurement of water extract amount

The water extract amounts in Test Sections 1 to 5 were measured according to the following procedures.
1) Weigh the mass of a pan to be used.
2) Put 50 mass g of the dried buckwheat noodles in 500 mL of boiling water, followed by an extraction treatment for 5 to 8 minutes.
3) Remove the noodles using a strainer with a mesh size of about 1.5 mm, and return the extraction liquid (hot water left over after boiling of the noodles) to the pot.
4) Boil the extraction liquid down for about 1 hour to evaporate moisture.
5) After confirming a completely dry state, weigh the mass of the pot again, calculate the water extract amount (mass g) as the increased mass, and further measure the extraction rate (water extract amount (mass g)/dried buckwheat noodle amount (50 mass g) × 100).

The results were as indicated in Table 2.

**[Table 2]**

| Sample | Water extract amount (mass g) | Extraction rate (mass %) |
|---|---|---|
| Test Section 1 | 6 | 12 |
| Test Section 2 | 6 | 12 |
| Test Section 3 | 6 | 12 |
| Test Section 4 | 4 | 8 |
| Test Section 5 | 3 | 6 |

All of Test Sections 1 to 3 using the processed buckwheat flour had a larger water extract amount than those of the commercial products (Test Sections 4 and 5). It was suggested that Test Sections 1 to 3 had a higher soba-yu concentration than those of the commercial products.

### Test Example 3: Test for measurement of degree of gelatinization (pregelatinization)

In Test Sections 1 to 3, 50 g of a specimen obtained by coarsely pulverizing buckwheat was collected in a 250-mL centrifuge tube. Next, about 150 mL of ethanol was added to the centrifuge tube to perform centrifugation (2000 rpm, 5 minutes), and a treatment of discarding the supernatant was repeated twice. Next, about 150 mL of acetone was added to the centrifuge tube to perform centrifugation (2000 rpm, 5 minutes), and the treatment of discarding the supernatant was repeated twice. Next, the centrifuge tube was air-dried (room temperature), the solid product obtained was subjected to a pulverization treatment using a water-cooled pulverizer (A10 [KA]), and the pulverized product was sieved (sieve mesh size: 150 µm) to obtain a sample for measurement of the degree of pregelatinization.

The processed buckwheat flour 1 (raw material for Test Section 1) and the processed buckwheat flour 2 (raw material for Test Section 3) were used in the same manner as in Test Sections 1 to 3, except that the first coarse pulverization was not performed, to obtain a sample for measurement of the degree of pregelatinization.

Next, for each of the samples, the degree of pregelatinization was measured (glucoamylase second method) in accordance with the description in the Reports of the Central Customs Laboratory, No. 51, "Reviews on Method for Measuring Degree of Pregelatinization of Starch by HPLC Method." A glucoamylase titer of 15 was used in the measurement of the degree of pregelatinization. In addition, after deactivation of the enzyme in a boiling bath, a treatment with a protein removal liquid was performed. Glucose CII-Test Wako (manufactured by FUJIFILM Wako Pure Chemical Industries, Ltd.) was used as a measurement reagent.

The results were as indicated in Table 3.

**[Table 3]**

| Sample | Degree pf pregelatinization (%) |
|---|---|
| Test Section 1 | 65 |
| Test Section 2 | 58 |
| Test Section 3 | 60 |
| Processed buckwheat flour 1 | 82 |
| Processed buckwheat flour 2 | 86 |

All of Test Sections 1 to 3, the processed buckwheat flour 1, and the processed buckwheat flour 2 produced by using a single screw extruder have a high degree of pregelatinization. This is considered to contribute to the binding properties of the buckwheat dough and the texture and crispness of the buckwheat noodles.

### Test Example 4: Test for measurement of molecular weight distribution

For Test Section 1 (buckwheat noodles), Test Section 2 (buckwheat noodles), Test Section 3 (buckwheat noodles), the processed buckwheat flour 1, and the processed buckwheat flour 2, the molecular weight distribution of the sugar-containing hot water extract was measured according to the gel filtration chromatography (GFC) measurement method which will be described below.

### Preparation of sample

### Test Sections 1 to 3

Into a beaker, 100 mL of ultrapure water was weighed and boiled using a hot stirrer (set temperature: 200°C). After boiling, about 10 g of the sample was added, and subjected to hot water extraction while being occasionally stirred with a stirrer. The hot water extraction was performed by adding 10 g of the sample into 100 mL of boiling water for 6 minutes. Since the diameter of the beaker used in the extraction was about 10 cm, the dried buckwheat noodles were folded into approximately 1/3 size before use. The extraction was followed by allowing to cool at room temperature for about 30 minutes, and a liquid part was subjected to a centrifugation treatment. The upper layer part obtained was filtered through a disk filter (pore size: 0.45 µm), and a filtrate was diluted twice with a mobile phase (0.1 M aqueous sodium nitrate solution). The diluted solution was filtered again through the disk filter (pore size: 0.45 µm), and the resulting filtrate was used as a sample for gel filtration chromatography measurement.

### Processed buckwheat flour 1 and processed buckwheat flour 2

Into a beaker, 100 mL of ultrapure water was weighed and boiled using a hot stirrer (set temperature: 200°C). After boiling, about 10 g of the sample was added, and subjected to hot water extraction while being occasionally stirred with a stirrer. The hot water extraction was performed by adding 10 g of the sample into 100 mL of boiling water for 6 minutes. The extraction was followed by allowing to cool at room temperature for about 30 minutes, and a liquid part was subjected to a centrifugation treatment. The upper layer part obtained was highly viscous and could not be filtered through a disk filter (pore size: 0.45 µm). Therefore, the upper layer part after centrifugation was diluted five times with a mobile phase (0.1 M aqueous sodium nitrate solution), and the diluted solution was filtered through a disk filter (pore size: 0.45 µm). The resulting filtrate was used as a sample for gel filtration chromatography measurement.

### Analysis method

Gel filtration chromatography measurement was performed using the following device and under measurement conditions.
Device: LC-2000 Plus system manufactured by JASCO Corporation
Column: SB-G+SB-804HQ+SB-805HQ manufactured by Shodex
Mobile phase: 0.1 M aqueous sodium nitrate solution
Flow rate: 0.5 mL/min
Column temperature: 40°C
Detector: differential refraction detector (RI)
Injection volume: 100 µL
Standard product: pullulan

The results were as indicated in Tables 4 to 8 (molecular weight in terms of the standard product (pullulan)).

**[Table 4]**

| Sample | Peak retention time (min) | Number average molecular weight (Mn) | Weight average molecular weight (Mw) | Degree of dispersion (Mw/Mn) | Area (%) |
|---|---|---|---|---|---|
| Test Section 1 | 20-35 | 17,000 | 1,100,000 | 6.3 | 23 |
| | 35-40 | 5,700 | 9,600 | 17 | 20 |
| | 40-44 | 250 | 510 | 2.0 | 57 |

**[Table 5]**

| Sample | Peak retention time (min) | Number average molecular weight (Mn) | Weight average molecular weight (Mw) | Degree of dispersion (Mw/Mn) | Area (%) |
|---|---|---|---|---|---|
| Test Section 2 | 20-35 | 15,000 | 670,000 | 4.4 | 12 |
| | 35-40 | 6,300 | 11,000 | 17 | 12 |
| | 40-44 | 220 | 390 | 1.7 | 76 |

**[Table 6]**

| Sample | Peak retention time (min) | Number average molecular weight (Mn) | Weight average molecular weight (Mw) | Degree of dispersion (Mw/Mn) | Area (%) |
|---|---|---|---|---|---|
| Test Section 3 | 20-35 | 20,000 | 1,100,000 | 5.5 | 38 |
| | 35-40 | 6,300 | 11,000 | 17 | 17 |
| | 40-44 | 290 | 560 | 2.0 | 46 |

**[Table 7]**

| Sample | Peak retention time (min) | Number average molecular weight (Mn) | Weight average molecular weight (Mw) | Degree of dispersion (Mw/Mn) | Area (%) |
|---|---|---|---|---|---|
| Processed buckwheat flour 1 | 20-35 | 27,000 | 1,400,000 | 5.1 | 47 |
| | 35-40 | 6,000 | 10,000 | 17 | 18 |
| | 40-44 | 280 | 530 | 1.9 | 35 |

**[Table 8]**

| Sample | Peak retention time (min) | Number average molecular weight (Mn) | Weight average molecular weight (Mw) | Degree of dispersion (Mw/Mn) | Area (%) |
|---|---|---|---|---|---|
| Processed buckwheat flour 2 | 20-35 | 29,000 | 1,600,000 | 57 | 60 |
| | 35-40 | 6,700 | 12,000 | 18 | 16 |
| | 40-44 | 300 | 580 | 2.0 | 24 |

Peak charts of Test Sections 1 to 3 showed the highest area proportion of low molecular weight peaks at retention times of 40 to 44 minutes. In addition, the processed buckwheat flour 1 and the processed buckwheat flour 2, as the raw materials for the test Sections, also had a high area proportion of low molecular weight peaks. From these results, it is considered that the use of a single screw extruder reduces the molecular weights of buckwheat constituent components such as sugar and makes them easier to solubilize, which contributes to good taste and sweetness of buckwheat noodles.

### Reference Signs List

1: Dried buckwheat noodle production system
2: Processed buckwheat flour producing unit
3: Raw grain flour producing unit
4: Dough producing unit
5: Fresh noodle producing unit
6: Drying unit
7: Extrusion condition adjusting unit
8: Shaping unit

## Claims

1. Processed buckwheat flour,
wherein a degree of pregelatinization of starch is 70% or more, and
wherein, in gel filtration chromatography analysis of a water extract of the processed buckwheat flour, a proportion of a peak area (A) for a weight average molecular weight (Mw) of 10 to 5,000 with respect to the total peak area (A/total peak area × 100) is 20% or more.

2. The processed buckwheat flour according to claim 1, wherein the degree of pregelatinization of the starch in the processed buckwheat flour is 75 to 99%.

3. The processed buckwheat flour according to claim 1 or 2, wherein the proportion of the peak area (A) for the weight average molecular weight (Mw) of 10 to 5,000 with respect to the total peak area (A/total peak area × 100) is 20 to 50%.

4. The processed buckwheat flour according to any one of claims 1 to 3, wherein the water extract of the processed buckwheat flour is obtained by subjecting 10 parts by mass of the processed buckwheat flour to an extraction treatment in 100 parts by mass of boiling water for 5 to 10 minutes.

5. The processed buckwheat flour according to claim 4, wherein a proportion of the water extract of the processed buckwheat flour is 1.1 to 3 parts by mass with respect to 10 parts by mass of the processed buckwheat flour.

6. A dried buckwheat noodle,
wherein a degree of pregelatinization of starch is 50% or more, and
wherein, in gel filtration chromatography analysis of a water extract of the dried buckwheat noodle, a proportion of a peak area (A) for a weight average molecular weight (Mw) of 100 to 5,000 with respect to the total peak area (A/total peak area × 100) is 30% or more.

7. The dried buckwheat noodle according to claim 6, wherein the degree of pregelatinization of the starch in the dried buckwheat noodle is 55 to 99%.

8. The dried buckwheat noodle according to claim 6 or 7, wherein the proportion of the peak area (A) for a weight average molecular weight (Mw) of 300 to 600 with respect to the total peak area (A/total peak area × 100) is 30 to 99%.

9. The dried buckwheat noodle according to any one of claims 6 to 8, wherein the water extract of the dried buckwheat noodle is obtained by subjecting 10 parts by mass of the dried buckwheat noodle to an extraction treatment in 100 parts by mass of boiling water for 5 to 10 minutes.

10. The dried buckwheat noodle according to claim 9, wherein a proportion of the water extract of the dried buckwheat noodle is 1.1 to 3 parts by mass with respect to 10 parts by mass of the dried buckwheat noodle.

11. The dried buckwheat noodle according to any one of claims 6 to 10, wherein the processed buckwheat flour according to any one of claims 1 to 5 is used as a raw material.

12. The dried buckwheat noodle according to any one of claims 6 to 11, which is Jyuwari soba (a buckwheat noodle made from 100% buckwheat flour).

13. A method for producing a dried buckwheat noodle, wherein the processed buckwheat flour according to any one of claims 1 to 5 is used as part of raw material grain flour.

14. The method according to claim 13, wherein the raw material grain flour consists of the processed buckwheat flour and buckwheat flour other than the processed buckwheat flour.

15. The method according to claim 13 or 14, wherein a content of the processed buckwheat flour in the raw material grain flour is 20 to 80% by mass.

16. The method according to any one of claims 13 to 15, which comprises:
the step of mixing the raw material grain flour and water to obtain a dough;
the step of shaping the dough to obtain a fresh noodle; and
the step of drying the fresh noodle.

17. The method according to any one of claims 13 to 16, wherein the processed buckwheat flour is obtained by feeding a buckwheat flour raw material to an extrusion shaping machine and puffing it.

18. The method according to claim 17, wherein a treatment temperature and an extrusion pressure in the extrusion shaping machine are determined in advance using a degree of pregelatinization of starch in the processed buckwheat flour and a molecular weight of a water extract of the processed buckwheat flour as indices.

19. The method according to claim 17 or 18, wherein the extrusion shaping machine is a single screw extruder.

20. The method according to any one of claims 16 to 19, wherein an amount of the water with respect to the total amount of the raw material grain flour is 30 to 60% by mass.

21. A system for producing a dried buckwheat noodle, comprising:
a processed buckwheat flour producing unit which produces the processed buckwheat flour according to any one of claims 1 to 5;
a raw material grain flour producing unit which blends the processed buckwheat flour into raw material grain flour;
a dough producing unit which mixes the raw material grain flour and water to obtain a dough;
a fresh noodle producing unit which shapes the dough to obtain a fresh noodle; and
a drying unit which dries the fresh noodle.

22. The system according to claim 21,
wherein the processed buckwheat flour producing unit comprises an extruding machine and an extrusion condition adjusting unit, and
wherein the extrusion condition adjusting unit adjusts a treatment temperature and an extrusion pressure using a degree of pregelatinization and an average molecular weight of starch in the processed buckwheat flour as indice.

23. A factory for producing a dried buckwheat noodle, comprising the system according to claim 21 or 22.
